# EUROPÄISCHE PATENTANMELDUNG

(11) **EP 4 160 084 A1**
(43) Veröffentlichungstag der Anmeldung: **05.04.2023**
(21) Anmeldenummer: 21200354.5
(22) Anmeldetag: 30.09.2021
(51) Int. Cl.: F21V 5/00, F21V 11/14, F21S 8/02, F21S 8/00, F21V 3/02, F21V 7/00, F21V 15/01, F21V 17/00, F21V 17/16, F21Y 103/10, F21Y 115/10, F21V 8/00

(54) **INNENRAUMLEUCHTE UND LINSEN MIT LOCHBLENDE**

(71) Anmelder: Siteco GmbH, 83301 Traunreut (DE)
(72) Erfinder: Eichele, Timo, 83362 Surberg (DE); Hösle, Tobias, 83329 Waging (DE); Schroll, Katrin, 83301 Matzing (DE); Schmidt, Tobias, 85748 Garching (DE)
(74) Vertreter: Schmidt, Steffen

(57) **Zusammenfassung**

Die Erfindung betrifft eine Innenraumleuchte, die Folgendes aufweist: wenigstens eine Lichtquelle, insbesondere eine oder mehrere LEDs (1), und eine gegenüber der Lichtquelle angeordnete flächige Lochblende (7) mit einer Vielzahl von regelmäßig angeordneten Lichtdurchtrittsöffnungen (10), sowie eine Linsenplatte (5), welche eine der Vielzahl von Lichtdurchtrittsöffnungen (10) entsprechende Vielzahl von Linsen (11) aufweist, wobei jeder Linse (11) jeweils eine der Lichtdurchtrittsöffnungen (10) optisch zugeordnet ist, wobei jeweils die Größe der Lichtdurchtrittsöffnung (10) in der Lochblende (7) kleiner ist als die Fläche der ihr zugeordneten Linse (11) innerhalb der Linsenplatte (5).

## Beschreibung

Die vorliegende Erfindung betrifft eine Innenleuchte und insbesondere eine Innenleuchte mit optischen Einrichtungen, welche zur blendfreien Beleuchtung eines Arbeitsplatzes eingerichtet sind.

Bei Innenraumleuchten, speziell bei Büroleuchten, besteht ein Problem, ein möglichst homogenes Erscheinungsbild der Leuchte mit guter Entblendung, kleiner Lichtaustrittsfläche, flachem optischen Aufbau und einem hohen Lichtstrom zu erzeugen. Wichtige messbare Kenngrößen zu Entblendung von Leuchten für Büroanwendungen sind dabei der Unified Glare Rating (UGR) sowie der Bildschirmarbeitsplatz (BAP)―Wert.

Der UGR ist in der DIN EN 12464-1 beschrieben und beschreibt die Direktblendung. Ein niedriger Wert kleiner 19 ist dabei sehr gut. Ein schlechter Wert kann zu nachlassender Konzentration und damit einer erhöhten Fehlerquote sowie zu Ermüdung führen. Der Wert kann durch den Lichtstrom sowie die lichttechnische Fläche beeinflusst werden. Ein hoher Lichtstrom hat einen hohen UGR, also eine schlechte Entblendung, zur Folge. Eine kleine lichttechnische Fläche hat ebenfalls einen hohen UGR, also eine schlechte Entblendung, zur Folge.

Der BAP-Wert ist ebenfalls in der DIN EN 12464-1 beschrieben und betrifft die Reflexblendung, insbesondere die Reflexe von Bildschirmen am Arbeitsplatz. Ein geringer Wert von 1500cd/m² oberhalb von einem Winkel von 65° ist dabei ein sehr guter Wert. Ein Wert von 3000cd/m² ist ebenfalls noch ein akzeptabler Wert, da die heutigen TFT-Bildschirme deutlich weniger spiegeln als die früheren Monitore. Ein zu hoher Wert kann jedoch ebenfalls zu nachlassender Konzentration und damit einer erhöhten Fehlerquote sowie zu Ermüdung führen.

Bisher wurde das Problem auf unterschiedliche Weisen gelöst. Eine diffuse Platte in der Lichtaustrittsfläche kann eingesetzt werden, um eine homogene Lichtaustrittsfläche zu schaffen. Um allerdings die geforderten Blendwerte zu erfüllen, muss der Lichtstrom reduziert werden bzw. die Lichtaustrittsfläche entsprechend vergrößert werden. Andere Entwicklungen sehen eine Lichtleiterplatte vor, wobei eine Seite der Platte als Lichtaustrittsfläche der Leuchte dient. Die Lichtaustrittsfläche kann auch mit besonderen optischen Strukturen und die der Lichtaustrittsfläche entgegengesetzte Seite der Lichtleiterplatte mit reflektierenden Material versehen werden. Allerdings muss auch bei diesen Leuchten, um die geforderten Blendwerte zu erfüllen, der Lichtstrom reduziert werden bzw. die Lichtaustrittsfläche entsprechend vergrößert werden.

Eine andere Variante von Innenraumleuchten setzen Lichtquellen, meist LEDs, in Verbindung mit TIR (Total Internal Reflection)-Linsen ein. Diese Linsen wirken wenigstens teilweise als Lichtleiter, um das Licht der nahezu punktförmigem Lichtquelle aufzuweiten und einen homogenen Lichtaustritt zu erzielen. Dadurch lassen sich ein guter UGR und gute BAP-Werte erzielen. Allerdings weisen diese Systeme häufig kein homogenes Erscheinungsbild auf. Die LED-Lichtquellen sind meist noch deutlich sichtbar.

Weitere Lösungen für Innenraumleuchten sehen Linsen oder Pyramiden als Microstrukturen auf der Lichtaustrittsseite vor. Die Linsen oder Prismen können eine Struktur in der Größenordnung von wenigen Mikrometern aufweisen. Der Vorteil eines solchen Systems ist die gezielte Lichtlenkung durch die einzelnen Prismen bzw. Linsen. Jedoch kann das Licht, das zwischen den einzelnen Strukturen die Platte verlässt, nicht kontrolliert gelenkt werden. Dieses unkontrolliert austretende Licht erhöht die Blendung.

Ausgehend von dem genannten Stand der Technik ist es daher die Aufgabe der vorliegenden Erfindung, eine Innenraumleuchte bereitzustellen, welche eine gute Entblendung und ein homogenes Erscheinungsbild hervorbringt und mit einer vergleichsweise kleinen Lichtaustrittsfläche eine gute Entblendung für die direkte Blendung und die indirekte Blendung für einen Bildschirmarbeitsplatz bereitstellt.

Gelöst wird die Aufgabe durch eine Leuchte nach Anspruch 1.

Eine Besonderheit der erfindungsgemäßen Innenraumleuchte besteht in der Kombination aus einer Linsenplatte, die eine Vielzahl von Linsen aufweist, die vorzugsweise in einer einstückigen Platte ausgebildet sind, und einer Lochblende, welche eine Vielzahl von Lichtdurchtrittsöffnungen aufweist. Jeder Lichtdurchtrittsöffnung der Lochblende ist optisch eine Linse in der Linsenplatte zugeordnet, insbesondere können die Linse und die Lichtdurchtrittsöffnung entlang einer gemeinsamen optischen Achse angeordnet sein. Die Lichtdurchtrittsöffnung weist einen Querschnitt auf, der kleiner als der Querschnitt der Linse in der optischen Platte ist. Die Lochblende ist zwischen der Lichtquelle der Leuchte und der Linsenplatte angeordnet, wobei der Abstand zwischen der Linsenplatte und der Lochblende verhältnismäßig klein oder Null ist. Die Lochblende hat dabei die Aufgabe, nur genau definierten Lichtstrahlen den Lichtaustritt zu gewähren. Diese definierten Strahlen werden dann über die nachfolgende Linse in der Linsenplatte abgelenkt. Durch eine konvexe Form der Linse wird das Licht zur optischen Achse abgelenkt und es tritt kein Licht zwischens den Linsen oder im Randbereich der Linsen durch die Linsenplatte. Die Linsen können in unterschiedlichen Ausführungsformen z.B. sphärische oder asphärische Linsen sein. Auch die Kombination verschiedener Linsentypen einschließlich Freiformlinsen ist möglich. Dadurch wird die Blendung begrenzt und es gibt kein Licht, das flach aus der Leuchte strahlt. Insbesondere wird durch die definierten Lichtdurchtrittsöffnungen Streulicht verhindert, das die Blendung wieder verschlechtert, wie es im aktuellen Stand der Technik der Fall ist.

Gemäß einer bevorzugten Ausführungsform liegt das Verhältnis zwischen dem Linsenradius einer Linse in der Linsenplatte zu einem Radius der ihr zugeordneten Lichtdurchtrittsöffnung in der Lochblende im Bereich von 1,5 bis 2,5, vorzugsweise im Bereich von 1,8 bis 2,2. Die Entblendung kann direkt über das Verhältnis von Lochradius zu Linsenradius beeinflusst und gesteuert werden. Wenn z.B. der Lochradius fast so groß ist wie der Linsenradius, dann ist die Blendung sehr hoch. Wenn z.B. der Lochradius deutlich kleiner als der Linsenradius ist, dann ist die Blendung sehr gering. Allerdings beeinflusst der Lochradius auch die Effizienz des optischen Systems. Ein kleiner Lochradius hat eine geringere Systemeffizienz zu Folge. Ist der Lochradius fast so groß wie der Linsenradius, dann ist die Systemeffizienz sehr hoch. Je nach Anforderung bietet dadurch die Erfindung für eine definierte Leuchtengröße und/oder einen definierten Lichtstrom die optimale angepasste Lösung. Ein Verhältnis von 2 zwischen Lochradius und Linsenradius hat sich als sehr gut herausgestellt, weil eine sehr gute Entblendung bei einer vergleichsweise sehr guten Effizienz erzielt werden kann. Andere Verhältnisse um die 2 liefern ebenfalls gute Ergebnisse.

Gemäß einer bevorzugten Ausführungsform ist das Verhältnis zwischen dem Linsenradius und dem Radius der Lichtdurchtrittsöffnung für alle Linsen und Lichtdurchtrittsöffnungen gleich. In dieser Ausführungsform wird ein homogenes Erscheinungsbild der Lichtaustrittsfläche erzielt, weil jede Linse in der Lochblende in Verbindung mit der ihr zugeordneten Lichtaustrittöffnung eine etwa gleiche Lichtverteilung erzeugt.

Gemäß einer bevorzugten Ausführungsform erstrecken sich die optischen Achsen der Linsen in der Linsenplatte jeweils durch einen Mittelpunkt der der Linse zugeordneten Lichtdurchtrittsöffnung in der Lochblende. Die optische Zuordnung zwischen der Linse und der Lichtdurchtrittsöffnung ist ideal, wenn die Lichtdurchtrittsöffnung und die Linse eine gemeinsame optische Achse aufweisen. Geringe Toleranzen sind hinnehmbar, aber verschlechtern das Ergebnis der gezielten Lichtlenkung.

Gemäß einer bevorzugten Ausführungsform sind die Lichtdurchtrittsöffnungen in der Lochblende sowie die Linsen in der Linsenplatte jeweils in einem hexagonalen Muster angeordnet. Da die Linsen und die Lichtdurchtrittsöffnungen in der jeweiligen Ebene vorzugsweise kreisrund ausgebildet sind, lässt sich durch eine hexagonale Anordnung der Linsen in der Linsenplatte bzw. der Lichtdurchtrittsöffnungen in der Lochblende die Fläche optimal ausnutzen.

Gemäß einer bevorzugten Ausführungsform entspricht der Abstand von einem Lochmittelpunkt in den Lichtdurchtrittsöffnungen zu einem Scheitel der ihr zugeordneten Linse dem Wert eines Krümmungsradius der Linse ±20%. Wenn der Abstand vom Lochmittelpunkt zum Scheitel der Linse etwa dem Krümmungsradius der Linse entspricht, werden Strahlen, die z.B. unter 80° zu optischen Achse auf die Linse treffen durch die konvexe Form der Linse auf etwa 60° zur optische Achse abgelenkt. Dadurch wird die Blendung gegrenzt und es gibt kein Licht, welches flach aus der Leuchte strahlt.

Gemäß einer bevorzugten Ausführungsform ist die Linsenplatte auf der zu der Lochblende weisenden Seite eben ausgebildet, die Linsen in der Linsenplatte sind als plankonvexe Linsen ausgebildet, und die Linsen stehen aus der Linsenplatte nur auf der von der Lochblende abgewandten Seite hervor. Diese Ausführungsform ist in ihrem Aufbau besonders einfach, weil die planparallele Ausrichtung der Lochblende zu der Linsenplatte einfach durch Auflegen der Lochblende auf die Linsenplatte erfolgen kann. Es ist sogar möglich, die Lochblende durch einen Aufdruck auf die Linsenplatte auszubilden. Der Begriff "Lochblende" bezieht sich dann auf die Schichtstärke des Farbaufdrucks auf der Linsenplatte. In einer weiteren bevorzugten Ausführungsform kann die Linsenplatte und die Lochblende auch gemeinsam in einem mehrkomponentigen Spritzgussverfahren hergestellt sein. Die Linsenplatte ist dabei durch einen transparenten Kunststoff gebildet, während die Lochblende einstückig mit der Linsenplatte verbunden ist, aber aus einem lichtundurchlässigen, insbesondere lichtreflektierenden Kunststoff gebildet ist.

Gemäß einer alternativen Ausführungsform ist die Lochblende beabstandet von der Linsenplatte angeordnet, wobei der Abstand kleiner als ein doppelter oder einfacher Krümmungsradius der Linsen ist. Der Abstand zwischen der Lochblende und der Linsenplatte soll klein sein, um Streulicht zu verhindern, welches nach dem Durchtritt durch die Lochblende auf einen Randbereich der Linse auftrifft. Insbesondere die Lichtstrahlung zwischen den Linsen in der Platte ist bei herkömmlichen Anordnungen dafür verantwortlich, dass die durch die Linsen erzielte Entblendung verschlechtert wird.

Gemäß einer bevorzugten Ausführungsform weist die Linsenplatte eine Antireflexbeschichtung auf. Dadurch kann weiter Streulicht verhindert werden, welches die Linsenplatte mit einem Winkel von mehr als etwa 65° zur optischen Achse verlässt. Dadurch wird die Entblendung noch einmal verbessert.

Gemäß einer bevorzugten Ausführungsform ist ein maximale Durchmesser der Linsen der Linsenplatte und/oder ein maximaler Durchmesser der Lichtdurchtrittsöffnungen in der Lochblende kleiner als 5 mm, vorzugsweise kleiner als 1 mm. Die Größe der Linsen sowie der Lichtdurchtrittsöffnungen kann im Micro- oder Millimeter-Bereich liegen. Die kleinen Strukturen sind von Vorteil, um ein gleichmäßigen homogenes Erscheinungsbild in der Lichtaustrittsfläche der Leuchte zu erzeugen.

Gemäß einer bevorzugten Ausführungsform ist die Lochblende auf der zur Lichtquelle weisenden Seite aus einem reflektierenden Material, insbesondere aus einem hochreflektierenden Material mit einem Reflexionsgrad von größer als 80%, gebildet. Um trotz der Lochblende eine gute Systemeffizienz der Leuchte zu erzeugen, ist es von Vorteil, die Lochblende insbesondere in Verbindung mit einem weiteren Reflektor auf der gegenüberliegenden Seite der Lichtquelle mit einem hohen Reflexionsgrad von z.B. > 80%, besser noch >95% auszubilden. Dadurch ist das Licht, welches auf die Lochblende zwischen den Lichtdurchtrittsöffnungen auftritt, für den Wirkungsgrad der Leuchte nicht verloren, sondern wird durch ggf. mehrfache Reflexion wieder zur Lochblende umgelenkt, so dass sich der Gesamtwirkungsgrad der Leuchte erhöht. Ferner sollte das Material der Lochblende auch eine möglichst geringe Transmission aufweisen, möglichst < 2%, besser noch < 0,1 %. Auch diese geringe Transmission lässt sich durch ein hochreflektierendes Material mit entsprechender Schichtdicke einfach realisieren.

Gemäß einer bevorzugten Ausführungsform weist die Innenraumleuchte ferner einen Reflektor auf, welcher Licht der Lichtquelle in Richtung zu der Lochblende umlenkt. Der zusätzliche Reflektor kann das Licht, welches von der Lichtquelle nicht direkt auf die Lochblende auftrifft sowie Licht, welches ggf. von der Lochblende zurückreflektiert wird, wieder in Richtung zur Lochblende lenken, um den Wirkungsgrad der Leuchte zu erhöhen.

Gemäß einer bevorzugten Ausführungsform ist die Lichtquelle aus einer Anordnung mehrerer LEDs auf einer ebenen Fläche gebildet, die parallel zu der Lochblende angeordnet ist. Die ebene Fläche kann z.B. eine Platine sein, auf der die LEDs angebracht sind. Die ebene Anordnung hat den Vorteil, dass die LEDs parallel zu der Lochblende angeordnet sind, um die Lochblende möglichst gleichmäßig zu beleuchten.

Gemäß einer bevorzugten Ausführungsform umfasst die Lichtquelle wenigstens eine LED und in einem Bereich zwischen der LED und der Lochblende ist eine totalreflektierende Linse, TIR-Linse, angeordnet, so dass Licht der LED von der TIR-Linse seitlich von einer optischen Achse der LED weg abgelenkt wird. Durch die TIR-Linse wird das Licht der LED aufgeweitet und homogen über die Lochblende verteilt.

Gemäß einer bevorzugten Ausführungsform umfasst die Lichtquelle einen Lichtwellenleiter und der Lichtwellenleiter ist parallel zu der Lochblende in der Leuchte angeordnet. Insbesondere können mehrere LEDs an Stirnseiten des Lichtwellenleiters angeordnet sein, um Licht in den Lichtleiter einzukoppeln. Diese Ausführungsformen haben den Vorteil, dass mittels des Lichtwellenleiters die Lochblende über die gesamte Fläche gleichmäßig beleuchtet werden kann. Ferner ist es auch möglich, den Lichtwellenleiter mit einem Reflektor, wie vorhergehend beschrieben, zu kombinieren. Dabei kann auch Licht aus dem Lichtwellenleiter in einer von der Lochblende abgewandten Richtung abgegeben werden und durch den Reflektor wieder in Richtung zu der Lochblende umgelenkt werden.

Gemäß einer bevorzugten Ausführungsform ist eine Streuplatte im Bereich zwischen der Lichtquelle und der Lochblende angeordnet. Die Streuplatte hat den Vorteil, dass das Licht vor dem Auftreffen auf die Lochblende gleichmäßig verteilt wird. Insbesondere in Verbindung mit LEDs als Lichtquelle hat das den Vorteil, dass auf der Lichtaustrittsseite keine hellen Punkte an den Stellen der LEDs mehr erkennbar sind. Der im Stand der Technik bekannte Nachteil einer Streuplatte, der darin besteht, dass Licht die Streuplatte auch unter flachen Winkeln verlässt, wird durch die nachfolgende Kombination aus Lochblende und Linsenplatte kompensiert. Trotz der Verwendung einer Streuplatte kann daher die geforderte Entblendung erzielt werden.

Gemäß einer bevorzugten Ausführungsform weist die Leuchte an einer Lichtaustrittsseite der Linsenplatte eine ebene oder wannenförmige transparente Abdeckung auf. Die transparente Abdeckung kann zum Schutz der Linsenplatte dienen. Ferner können auch noch weitere lichtlenkende Elemente in der Wanne vorgesehen sein. Die Entblendung wird jedoch im Wesentlichen durch die Kombination aus Lochblende und Linsenplatte erzeugt.

Gemäß einer bevorzugten Ausführungsform sind die Lochblende gegenüber der Linsenplatte durch Elemente an den beiden Bauteilen, die formschlüssig ineinandergreifen, in horizontaler Ausrichtung zueinander festgelegt. Beispielsweise können Positionierungspins an der Linsenplatte, vorzugsweise einstückig mit dieser, angeformt sein, die in Öffnungen der Lochblende eingreifen. Ebenso ist es möglich, dass hervorstehende Bauteile der Lochblende in Vertiefungen der Linsenplatte eingreifen. Dadurch lässt sich insbesondere erzielen, dass die Lichtdurchtrittsöffnungen präzise gegenüber den optischen Achsen der Linsen der Lochblende richtig ausgerichtet sind. Von besonderem Vorteil ist dabei, dass die Linsenplatte und die Lochblende direkt ineinandergreifen.

Weitere Vorteile und Merkmale der vorliegenden Erfindung werden aus der nachfolgenden Beschreibung bevorzugter Ausführungsformen deutlich, die in Verbindung mit den beigefügten Figuren gegeben wird. Die Figuren stellen folgendes dar:
- Fig. 1 und 2.: zeigen Querschnitte durch eine Ausführungsform einer Innenraumleuchte.
- Fig.3: zeigt eine Querschnittsaufsicht auf eine Linsenplatte mit Lochblende.
- Fig. 4 und 5: zeigen Abschnitte einer Lochblende und einer Linsenplatte im Querschnitt mit Lichtstrahlung.
- Fig. 6: zeigt eine Aufsicht auf eine Lochblende.
- Fig. 7: zeigt eine Aufsicht auf eine Linsenplatte.
- Fig. 8: zeigt einen Querschnitt durch einen Teil einer Innenraumleuchte gemäß einer weiteren Ausführungsform.
- Fig. 9: zeigt einen Querschnitt durch eine Ausführungsform der Innenraumleuchte mit einem Lichtleiter.
- Fig. 10: zeigt einen Querschnitt durch eine Innenraumleuchte mit Lichtwellenleiter gemäß einer alternativen Ausführungsform.
- Fig. 11: zeigt den Querschnitt entsprechend der Fig. 10 für eine weitere Ausführungsform.
- Fig. 12: zeigt eine Aufsicht auf eine Lochblende mit einer Linsenplatte.
- Fig. 13: zeigt perspektivische Ansichten einer Linsenplatte und einer Lochblende.

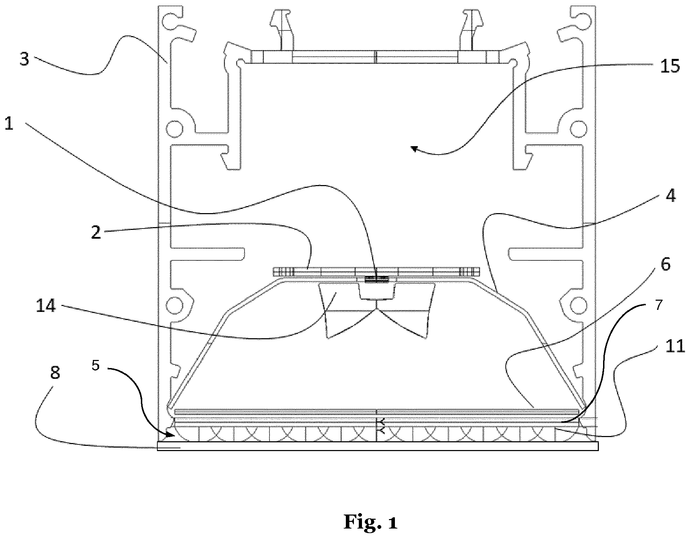

Fig. 1 zeigt einen Querschnitt durch die lineare Leuchte. Ein Gehäuse 3 bildet dabei einen Rahmen für eine darin befestigte LED-Platine 2 mit einer linearen Reihe von LEDs 1. Die LEDs sind dabei von einem Reflektor 4 umgeben, der die Aufgabe hat, zusammen mit einer Linse 14 das Licht zu mischen und in Richtung einer Streuplatte 6 zu schicken. Hinter der Streuplatte befindet sich eine Linsenplatte 5 mit einer Lochblende 7, die nur gezielt Licht durchlässt, das dann von den Linsen 11 in der Linsenplatte abgelenkt wird und so die Blendung positiv beeinflusst. Als Abschlussscheibe ist in Fig. 1 noch eine transparente Platte 8 gezeigt. Ein Bauraum 15 für ein EVG ist ebenfalls in der Figur gezeigt.

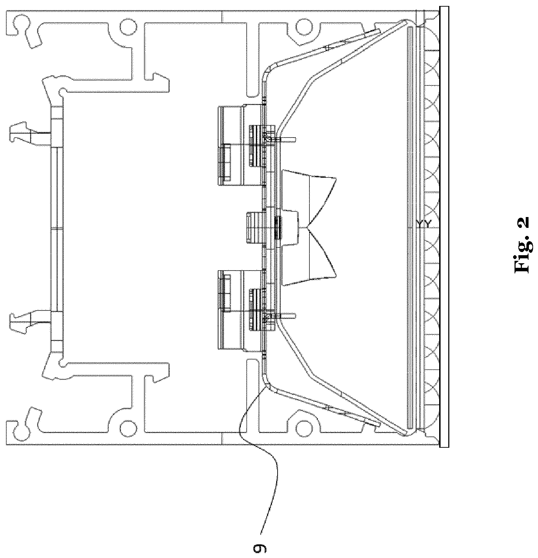

Fig. 2 zeigt den Aufbau wie in der Fig. 1. allerdings an einer Stelle entlang der Längserstreckung der Leuchte, wo sich noch ein Geräteträger 9 befindet, der die LED-Platine mit dem Gehäuse verbindet.

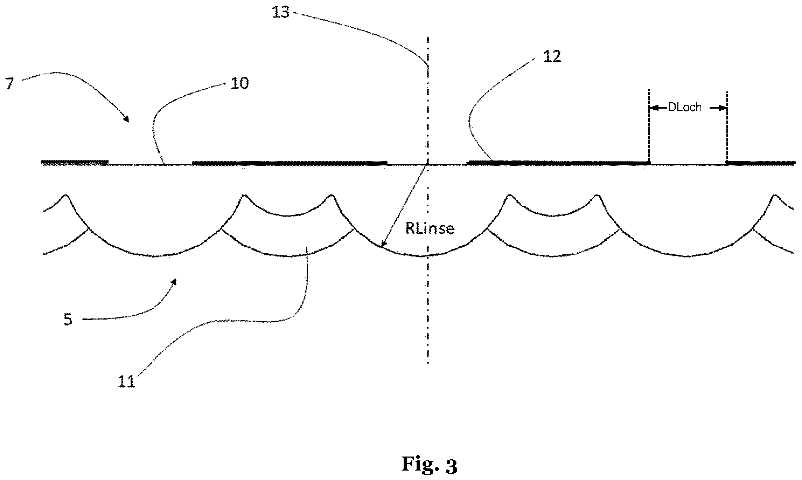

Fig. 3 zeigt einen Schnitt durch die Linsenplatte 5 mit Lochblende 7. Eingezeichnet sind dabei die Lichtdurchtrittsöffnungen 10 mit dem Lochdurchmesser, DLoch, sowie die Linsen 11 mit Linsenradius, RLinse, und optischer Achse der Linse 13. Es ist deutlich zu sehen, dass DLoch kleiner als RLinse ist, und dass der Mittelpunkt der Lichtdurchtrittsöffnung 10 auf der optischen Achse 13 der jeweiligen Linse 11 liegt.

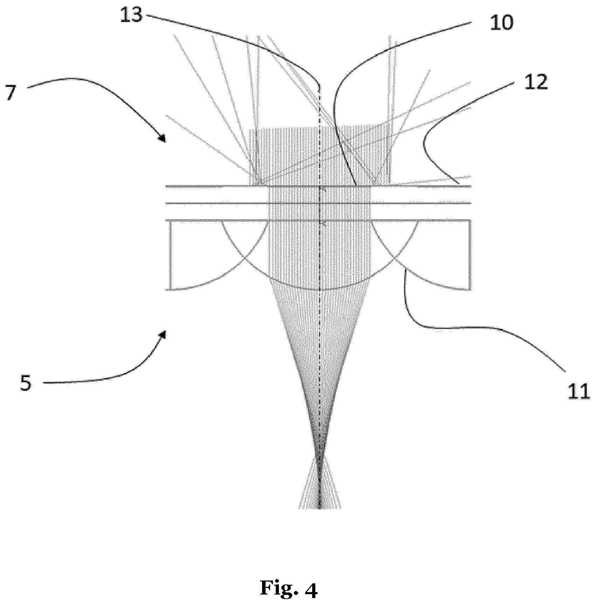

Fig. 4 zeigt einen Schnitt durch die Linsenplatte 5 mit Lochblende 7 sowie ein paralleles Strahlenbündel, das unter o° auf die Lochblende trifft. Nur der Teil des Lichts, der auf die Lichtdurchtrittsöffnung 10 trifft wird von der Linse 11 fokussiert. Das Licht, das auf einen hochreflektierenden Teil der Lochblende 12 trifft wird reflektiert. Die Figur zeigt dabei deutlich, dass kein Lichtstrahl die Linsenplatte unter einem sehr hohen Winkel gegenüber der optischen Achse 13 verlässt.

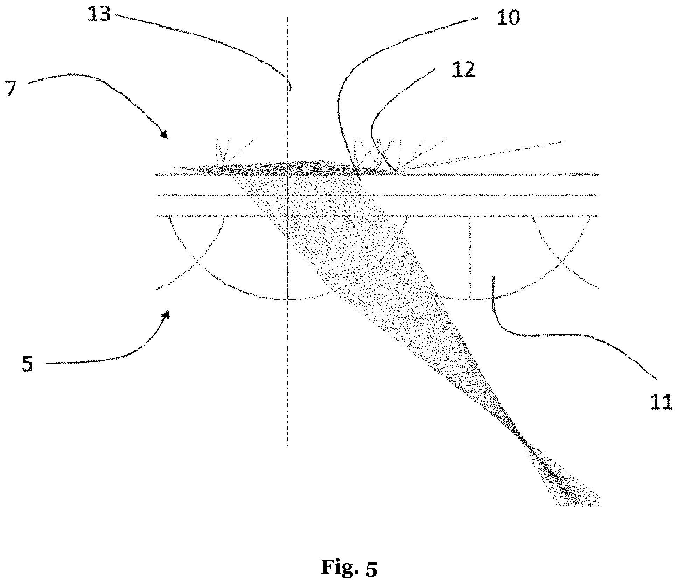

Fig. 5 zeigt einen Schnitt durch die Linsenplatte 5 mit Lochblende 7 sowie ein paralleles Strahlenbündel, das unter 80° auf die Lochblende trifft. Nur der Teil des Lichts, der auf die Lichtdurchtrittsöffnung 10 trifft, wird von der Linse 11 fokussiert. Das Licht, das auf den hochreflektierenden Teil 12 der Lochblende 7 trifft, wird reflektiert. Deutlich ist hier ein Vorteil der Erfindung zu sehen, denn das zur optischen Achse um 80° einfallende parallele Licht verlässt die Linsenplatte unter einem maximalen Winkel von 60° zur optischen Achse. Die Innenraumleuchte hat also gute Blendwerte, da in den UGR- Wert und in den BAP-Wert hauptsächlich Licht eingeht, das die Leuchte unter einem Winkel von über 65° verlässt. Bei Licht, das die Linsenplatte unter einem Winkel von über 65° verlässt, handelt es sich größtenteils um Streulicht, das durch Fresnelreflexionen an der Linsenaustrittsfläche entstehen. Durch eine Antireflex-Beschichtung der Linsenplatte können diese Effekte weiter minimiert werden und die Entblendung noch einmal verbessert werden. In der Figur 5 ist auch zu sehen, dass die Linsen eine homogen leuchtende Fläche erzeugen, da Licht über den gesamten Linsenradius emittiert wird. Durch eine hexagonale Anordnung der einzelnen Linsen 11 entsteht dann eine homogen leuchtende Fläche. Es bieten sich aber auch lineare Muster an. Für eventuelle Designeffekte können auch unterschiedliche Lochdurchmesser bzw. Linsendurchmesser kombiniert werden.

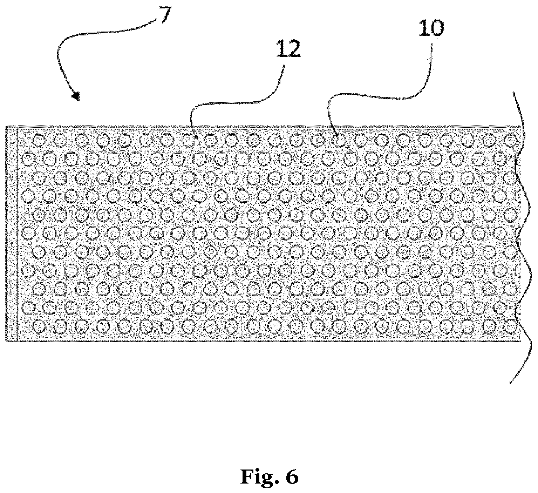

Fig. 6 zeigt die Lochblende 7 in der Draufsicht. Die Lichtdurchtrittsöffnungen 10 in der Lochblende 7 und der Hochreflektierender Teil der Lochblende 12 sind dabei gezeigt.

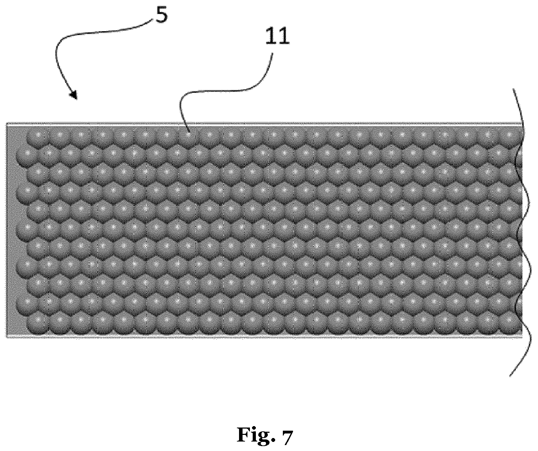

Fig. 7 zeigt die Linsenplatte 5 mit den einzelnen Linsen 11 in der Draufsicht. Zu dieser Linsenplatte 5 wird die Lochblende 7 aus Fig. 6 positioniert, so dass die Linsen 11 konzentrisch auf den Lichtdurchtrittsöffnungen 10 der Lochblende 7 sitzen.

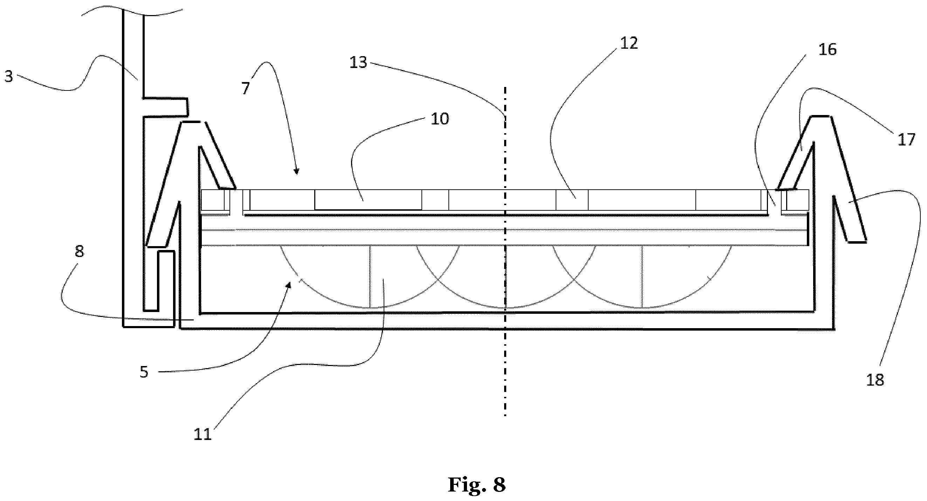

Fig. 8 zeigt vereinfacht die Linsenplatte 5 mit den einzelnen Linsen 11 in der Schnittansicht. Die Lochblende 7 ist in dieser Ausführungsform eine separate Platte, die über Lichtdurchtrittsöffnungen und Positionierpins in der Linsenplatte 7 positioniert und ausgerichtet wird. Die zwei Platten werden in dieser Figur über ein Extrusionsprofil, was gleichzeitig eine Abschlussplatte 8 ist, zusammengehalten. Das Zusammenhalten der Platten wird über zwei Fixierungspins 17 realisiert. Als Fixierung der Baugruppe im Gehäuse 3 dienen die Fixierpins für das Gehäuse 18. (Das Gehäuse ist nur in Fig. 8 auf der linken Seite gezeigt).

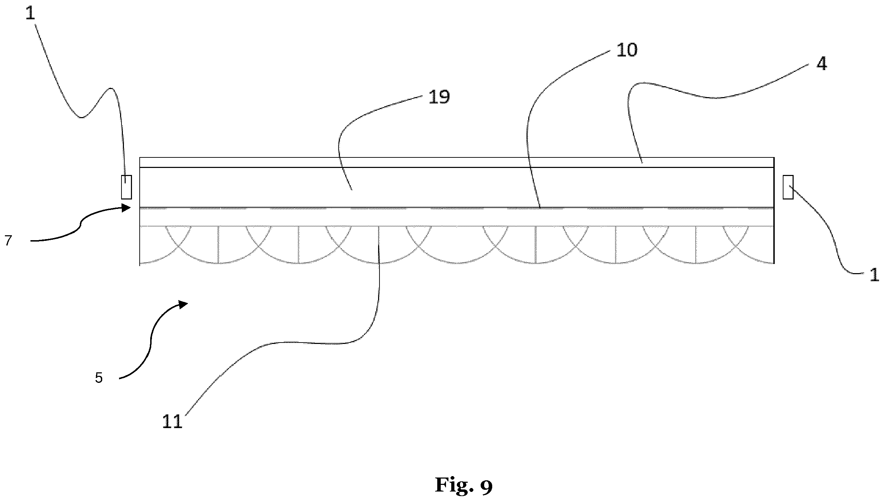

Fig. 9 zeigt einen weiteren Leuchtenaufbau für die Linsenplatte 5 mit Lochblende 7. Dabei wird das Licht einer LED 1 in einem Lichtwellenleiter 19 eingekoppelt. Auch bei diesem Aufbau wird der Reflektor 4 vorgesehen, dieser kann diffus oder gerichtet reflektieren. Gerichtete Reflexion eignet sich dabei, wenn der Aufbau sehr Lange und das Licht weit geleitet werden muss. Ist der Aufbau kurz oder wird von der Langen Seite (eventuell sogar von beiden Seiten) eingekoppelt, dann reicht es, wenn der Reflektor diffus reflektiert. Der Lichtwellenleiter 19 kann als massive Lichtleiterplatte oder als ein Hohllichtleiter ausgebildet sein.

Das Licht wird so lange in der Lichtleiterplatte von den zwei reflektierenden Seiten des Reflektors und der Lochblende hin und her reflektiert bis das Licht an den Lichtdurchtrittsöffnungen 10 das System verlassen kann. Für das reflektierende Material der Lochblende kann wie beim Reflektor 4 ebenfalls diffuse und gerichtete Reflexion mit gleichem Effekt vorgesehen sein. Der Lichtwellenleiter kann in dieser Ausführungsform ein transparentes Material oder Luft sein, da beide Seiten einen zusätzlichen Reflektor aufweisen.

Vorteil dieses Systems mit Lichtwellenleiter 19 ist ein sehr flaches optisches System. Licht kann dabei an allen Seiten oder nur vereinzelt an den Seiten eingekoppelt werden. Eine Einkopplung nur an einer Seite ist ebenfalls denkbar. Die offenen Enden des Lichtwellenleiters sollten denn ebenfalls einen Reflektor oder eine Verspiegelung aufweisen. Mit dieser Ausführungsform sind so gut wie alle Formen und Größen möglich, z.B. quadratisch, rund, halbrund, sternförmig,...

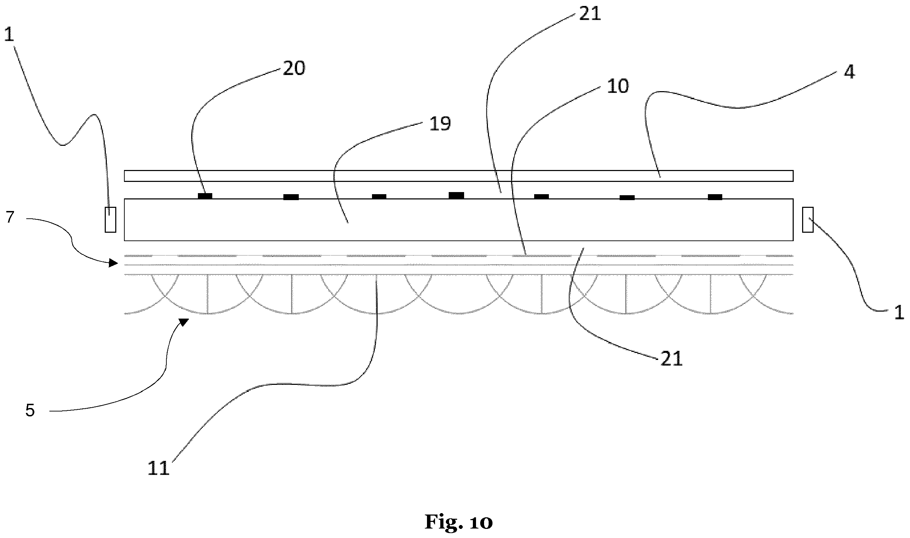

Fig. 10 zeigt ebenfalls einen Aufbau mit Lichtwellenleiter 19. Dabei ist zwischen Reflektor 4 und Lichtwellenleiter sowie zwischen Lichtwellenleiter und Lochblende jeweils ein Luftspalt 21. Dadurch kann das Licht ohne Reflektoren, sondern mit Hilfe der Totalreflexion transportiert werden. Über Strukturen oder Bedruckungen 20 im Lichtwellenleiter 19 kann das Licht dann auf der gegenüberliegenden Seite ausgekoppelt werden. Im Idealfall (wie in der Figur gezeigt) befindet sich dort eine Lichtdurchtrittsöffnung 10. Um über einen langen Bereich Licht homogen auszukoppeln, werden normalerweise mehr Auskoppelstrukturen benötigt, je weiter man von der LED 1 entfernt ist.

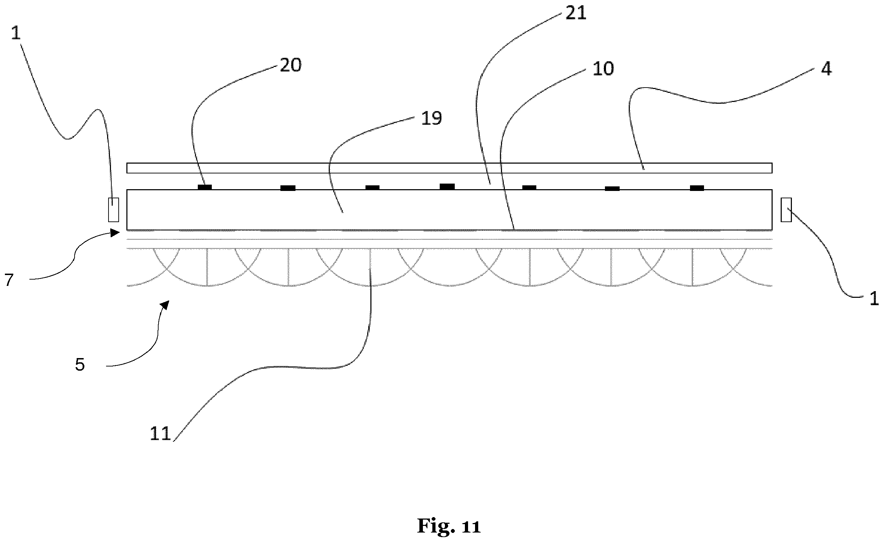

In der Ausführungsform gemäß Fig. 11 fehlt der Luftspalt zwischen Lichtwellenleiter 19 und Lochblende 7. Die Lochblende 7 reflektiert dabei gerichtet, z.B. mit einer Aluminium- oder Silberbeschichtung.

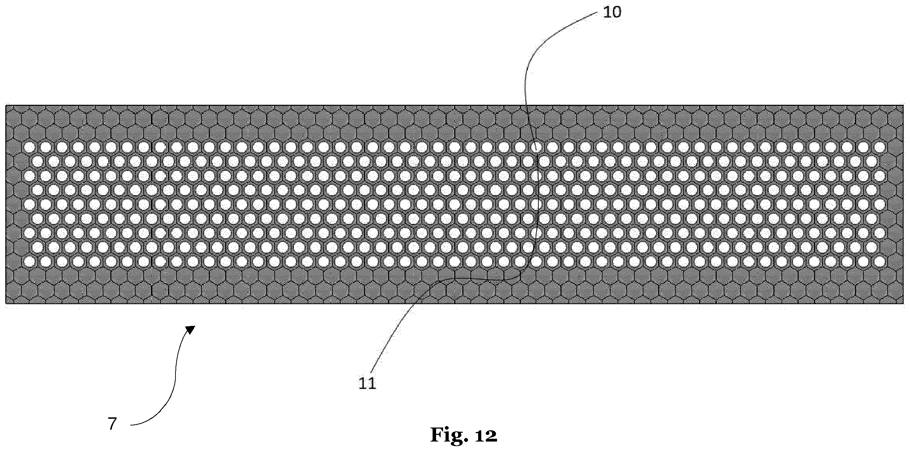

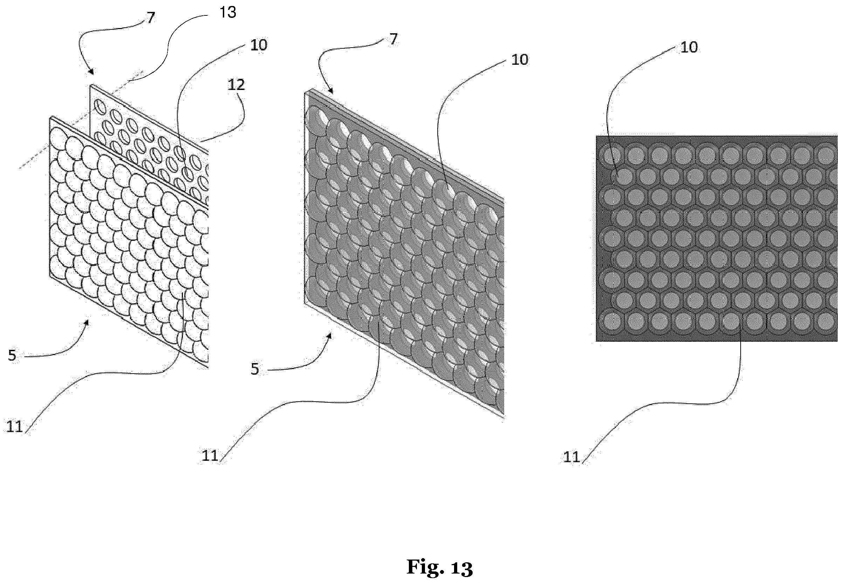

Figs. 12 und 13 sind weiter Darstellungen der Lochblende mit Linsen, Fig. 12 mit Bedruckung und Fig. 13 aufgebaut aus zwei Komponenten.

### Bezugszeichenliste

- 1: LED
- 2: LED-Platine
- 3: Gehäuse
- 4: Reflektor (hoch reflektierend)
- 5: Linsenplatte
- 6: Streuplatte
- 7: Lochblende
- 8: Wanne oder Platte (transparent)
- 9: Geräteträger
- 10: Lichtdurchtrittsöffnung in Lochblende
- 11: Linse in der Linsenplatte
- 12: Hochreflektierender Teil der Lochblende
- 13: optische Achse
- 14: TIR-Linse
- 15: Bauraum für EVG
- 16: Positionierpin
- 17: Fixierungspins für der Linsenplatte
- 18: Fixierpins für das Gehäuse
- 19: Lichtwellenweiter
- 20: Auskoppelelement (Bedruckung, Einkerbungen wie z.B. Prismen)
- 21: Luftspalt

- RLinse: Radius der Linse
- DLoch: Durchmesser der Lichtdurchtrittsöffnung

## Patentansprüche

1. Innenraumleuchte, die Folgendes aufweist:
wenigstens eine Lichtquelle, insbesondere eine oder mehrere LEDs, und
eine gegenüber der Lichtquelle angeordnete flächige Lochblende (7) mit einer Vielzahl von regelmäßig angeordneten Lichtdurchtrittsöffnungen (10), sowie eine Linsenplatte (5), welche eine der Vielzahl von Lichtdurchtrittsöffnungen (10) entsprechende Vielzahl von Linsen (11) aufweist, wobei die Linsen (11) jeweils einer der Lichtdurchtrittsöffnungen (10) optisch zugeordnet sind,
wobei jeweils die Größe der Lichtdurchtrittsöffnung (10) in der Lochblende (7) kleiner ist als die Fläche der ihr zugeordneten Linse (11) innerhalb der Linsenplatte (5).

2. Innenraumleuchte nach Anspruch 1, wobei das Verhältnis zwischen dem Linsenradius einer Linse (11) in der Linsenplatte (5) zu einem Radius der ihr zugeordneten Lichtdurchtrittsöffnung (10) in der Lochblende (7) im Bereich von 1,5 bis 2,5, vorzugsweise im Bereich von 1,8 bis 2,2, liegt.

3. Innenraumleuchte nach Anspruch 2, wobei das Verhältnis zwischen dem Linsenradius und dem Radius der Lichtdurchtrittsöffnung (10) für alle Linsen (11) und Lichtdurchtrittsöffnungen (10) gleich ist.

4. Innenraumleuchte nach einem der vorhergehenden Ansprüche, wobei die optischen Achsen der Linsen (11) in der Linsenplatte (5) sich jeweils durch einen Mittelpunkt der der Linse (11) zugeordneten Lichtdurchtrittsöffnung (10) in der Lochblende (7) erstrecken.

5. Innenraumleuchte nach einem der vorhergehenden Ansprüche, wobei die Lichtdurchtrittsöffnungen (10) in der Lochblende (7) sowie die Linsen (11) in der Linsenplatte (5) jeweils in einem hexagonalen Muster angeordnet sind.

6. Innenraumleuchte nach einem der vorhergehenden Ansprüche, wobei der Abstand von einem Lochmittelpunkt in den Lichtdurchtrittsöffnungen (10) zu einem Scheitel der ihr zugeordneten Linse (11) dem Wert eines Krümmungsradius der Linse ±20% entspricht.

7. Innenraumleuchte nach einem der vorhergehenden Ansprüche, wobei die Linsenplatte (5) auf der zu der Lochblende (7) weisenden Seite eben ausgebildet ist, die Linsen (11) in der Linsenplatte (5) als plankonvexe Linsen (11) ausgebildet sind, und die Linsen (11) aus der Linsenplatte (5) nur auf der von der Lochblende (7) abgewandten Seite hervorstehen.

8. Innenraumleuchte nach einem der vorhergehenden Ansprüche, wobei die Lochblende (7) auf die Linsenplatte (5) aufgelegt ist.

9. Innenraumleuchte nacheinem der vorhergehenden Ansprüche 1 bis 7, wobei die Lochblende (7) als Aufdruck auf die Linsenplatte (5) ausgebildet ist, oder in einem mehrkomponentigen Spritzgussverfahren gemeinsam mit der Linsenplatte (5) hergestellt ist.

10. Innenraumleuchte nach einem der vorhergehenden Ansprüche, wobei ein maximaler Durchmesser der Linsen der Linsenplatte (5) und/oder ein maximaler Durchmesser der Lichtdurchtrittsöffnungen (10) in der Lochblende (7) kleiner als 5 mm, vorzugsweise kleiner als 1 mm, ist.

11. Innenraumleuchte nach einem der vorhergehenden Ansprüche, wobei die Linsenplatte (5) eine Antireflexbeschichtung aufweist.

12. Innenraumleuchte nach einem der vorhergehenden Ansprüche, wobei die Lochblende (7) auf der zur Lichtquelle weisenden Seite aus einem reflektierenden Material (12), insbesondere aus einem hochreflektierenden Material mit einem Reflexionsgrad von größer als 80%, gebildet ist.

13. Innenraumleuchte nach einem der vorhergehenden Ansprüche, wobei die Innenraumleuchte ferner einen Reflektor (4) aufweist, welcher Licht der Lichtquelle in Richtung zu der Lochblende (7) umlenkt.

14. Innenraumleuchte nach einem der vorhergehenden Ansprüche, wobei die Lichtquelle aus einer Anordnung mehrerer LEDs auf einer ebenen Fläche gebildet ist, die parallel zu der Lochblende (7) angeordnet ist.

15. Innenraumleuchte nach einem der vorhergehenden Ansprüche, wobei die Lichtquelle wenigstens eine LED (1) umfasst und in einem Bereich zwischen der LED (1) und der Lochblende (7) eine totalreflektierende Linse, TIR-Linse (14), angeordnet ist, so dass Licht der LED von der TIR-Linse (14) seitlich von einer optischen Achse der LED weg abgelenkt wird.

16. Innenraumleuchte nach einem der vorhergehenden Ansprüche, wobei die Lichtquelle einen Lichtwellenleiter (19) umfasst und der Lichtwellenleiter (19) parallel zu der Lochblende (7) in der Leuchte angeordnet ist.

17. Innenraumleuchte nach Anspruch 15, wobei LEDs (1) an einer oder mehreren Stirnseiten des Lichtwellenleiters (19) zum Einkoppeln von Licht in den Lichtleiter angeordnet sind.

18. Innenraumleuchte nach einem der vorhergehenden Ansprüche, wobei eine Streuplatte (6) im Bereich zwischen der Lichtquelle und der Lochblende (7) angeordnet ist.

19. Innenraumleuchte nach einem der vorhergehenden Ansprüche, wobei die Leuchte an einer Lichtaustrittsseite der Linsenplatte (5) eine ebene oder wannenförmige transparente Abdeckung (8) aufweist.

20. Innenraumleuchte nach einem der vorhergehenden Ansprüche, wobei die Lochblende (7) gegenüber der Linsenplatte (5) durch Elemente an den beiden Bauteilen, die formschlüssig ineinandergreifen, in horizontaler Ausrichtung zueinander festgelegt sind.
